## Europäisches Patentamt

## European Patent Office

## Office européen des brevets

(11) Publication number: **0 051 152 B1**

(12) **EUROPEAN PATENT SPECIFICATION**

(45) Date of publication of patent specification: **25.02.87**

(51) Int. Cl.⁴: **G 01 N 21/73, G 01 J 3/02**

(21) Application number: **81107860.9**

(22) Date of filing: **02.10.81**

(54) Optical coupling device.

(30) Priority: **31.10.80 US 202511**

(43) Date of publication of application:
**12.05.82 Bulletin 82/19**

(45) Publication of the grant of the patent:
**25.02.87 Bulletin 87/09**

(84) Designated Contracting States:
**CH DE FR LI**

(56) References cited:
**EP-A-0 004 962
US-A-2 043 945
US-A-3 669 546
APPLIED SPECTROSCOPY, vol. 28, no. 2,
March-April 1974, BALTIMORE (US) G. DREHER
et al.: "An inexpensive vacuum ultraviolet
Spectrograph", pages 184-190**

**APPLIED SPECTROSCOPY, vol. 34, no. 5,
September-October 1980, BALTIMORE (US) D.
HEINE et al.: "Qualitative aspects of an
inductively coupled plasma in the spectral
region between 120 and 185 nm", pages
595-598**

(73) Proprietor: **THE PERKIN-ELMER CORPORATION
Main Avenue
Norwalk Connecticut 06856 (US)**

(72) Inventor: **Russo, Albert J.
23, Belden Avenue
Norwalk Connecticut 06856 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

(56) References cited:
**APPLIED OPTICS, vol. 10, no. 6, June 1971,
NEW YORK (US) T.T. KIKUCHI: "Description
and analysis of a vacuum ultraviolet atomic
line source", pages 1288-1290**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an optical coupling device of the type for coupling light, emitted by a plasma torch light source to a spectrometer, said coupling device comprising a quartz tube for containing the source, and a tubular quartz body, said tubular body being at one end rigidly affixed to said tube and at its other end being, in use, fixed in a gas-tight manner to the spectrometer, the axis of said tubular body being perpendicular to the axis of said tube said tubular body having an opening in its wall for allowing the supply of gas or for applying a vacuum to said tubular body so as to provide an oxygen-free optical path within said tubular body.

An optical coupling device of this type is described in the journal of Applied Spectroscopy, Volume 34, No. 5, 1980, pages 595—598. Many analytical instruments employ spectroscopic techniques in measuring a test sample. The spectroscopic portion of such an instrument is usually positioned between a light radiation source and a detection mechanism and is commonly sealed, or closed, to protect the optical faces from contamination. One such instrument is commonly known as a plasma flame emission spectrometer. In such a spectrometer, a liquid containing a test sample is first atomized and then burned in a plasma torch, such as the torch described in U.S. Patent No. US—A—3,467,471, issued to Greenfield et al. on September 16, 1969. The plasma torch supplies considerable energy, due to its relatively high temperature, usually on the order of 5,000°C, to the atoms of the test sample. This energy causes some of the electrons of the atoms to jump from their ground state to a predictable, but unstable, higher energy level state. When such an excited electron decays to the ground state light radiation is emitted. The energy of the light radiation is equal to the quantum energy difference between the ground state and the higher excited state. As well known, this emitted light radiation is characteristic of the atom involved and can be measured to determine information about the presence of a particular element in the test sample. These elemental measurements are well known in the analytical instrument field.

As well known, a plasma torch emission source can invest ground state electrons of some atoms with a sufficient quantum energy that the resulting wavelength of the subsequent emitted light, due to electron degeneration, is in the ultra-violet region of the light spectrum. For example, light waves having wavelengths less than about 200 nanometers are often emitted in plasma torch emission instruments. However, light radiation of such a rather short wavelength is rapidly attenuated by the oxygen of the atmosphere. In the particular example of a plasma torch flame emission spectrophotometer, the attenuating medium is the air ambient space between the flame of the plasma torch and the optical entrance of a monochromator. Thus, one of the more advantageous features of plasma torch emission measurements, i.d., obtaining characteristic spectral lines having comparatively high energy and relatively short wavelength, is severely inhibited by the inherent spacing between the plasma torch and the optical segment of the instrument.

In the above mentioned journal of Applied Spectroscopy, Volume 34, No. 5, 1980, pages 595—598, the optical coupling device provides an oxygen-free path between the plasma torch and the spectrograph. In this device, it is possible to pump out the oxygen or to fill the coupling device with an inert gas. With this measure, one is even able to detect radiation in the far UV region which would not be possible if oxygen were in the path between the plasma source and the monochromator.

In this known device, the purge gas flows through the copper tube and through the tube in which the plasma torch is mounted. The exhaust of this purge gas is the same as it is used for the torch flame, in other words, the purge gas impinges onto the flame and effects the flame form. This could have a negative influence on the form of the flame and, therefore, on the image properties which may vary when the flame form varies.

Also, from the US—A—3 669 546, an optical coupler is known which provides an oxygen-free path for measuring UV wavelength. The plasma source is, however, connected to the optical coupler via several members and a bellows. The members are fixed to the optical coupler and, as a consequence of this complicated arrangement, changing of the plasma source will be complicated. The coupling device disclosed in the GB—A—20 43 945 also requires, for each measurement, an optical alignment between the plasma source and a light focussing element.

It is the task of the present invention to provide an optical coupling device of the type as stated above which has a simple construction, which is very easy to handle and which allows reproducible and comparable measurements.

This task is solved with a coupling device of the above mentioned type in which an optical gastight sealing quartz window is located either in the wall of said tube so as to close said one end of said tubular body or within said tubular body near to its junction with said tube so as to close said tubular body in the region of its said one end.

By fixing the tubular body and the tube to one another, a special ajustment procedure is not needed, so that always uniform and comparable measurements are possible. Furthermore, the quartz window between the plasma torch and the part of the optical coupling device in which the inert gas is provided acts as a protection for the plasma source so that the plasma source is not affected by the flow of the inert gas flow. As a consequence, the flame is not affected by said flow and may, therefore, uniformly illuminate the entrance slit.

Preferred embodiments are disclosed in the subclaims.

The invention is now described with respect to the drawings:

Fig. 1 is a block diagram of the primary components of a typical analytical instrument but which includes a device embodying the principles of the present invention;

Fig. 2 is a cross-sectional view of one embodiment of an optical coupling device, not drawn to scale, employing the principles of the present invention; and

Fig. 3 is a cross-sectional view of another embodiment of an optical coupling device, not drawn to scale, employing the principles of the present invention.

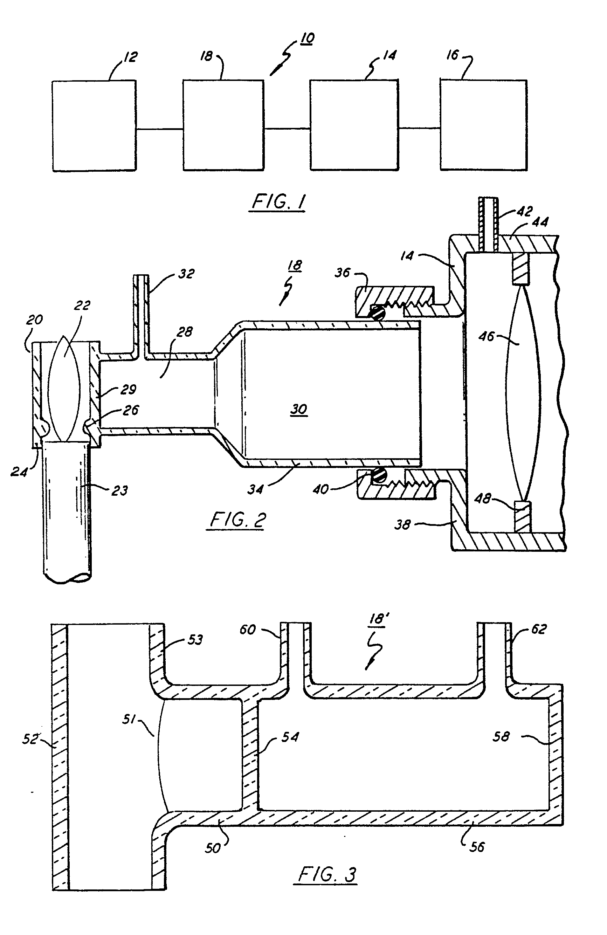

The primary components of a typical analytical instrument, for example, a plasma flame emission spectrometer, are indicated generally at 10 in Figure 1. The plasma flame emission spectrometer 10 includes a light radiation source 12, a monochromator 14 and a detector/readout apparatus 16. In addition, and in accordance with the principles of the present invention, the plasma flame emission spectrometer 10 includes an optical coupling device 18 more fully described below. The source 12 is a plasma torch. Such torches are known in the art and are designed to impart thermal energy to the atoms of a test sample which is atomized and injected thereinto. The monochromator 14 is, as well known in the art, an optical apparatus for isolating a relatively narrow spectral portion of the light spectrum impinging on its entrance port. The isolated spectral portion is then projected onto an optical detecting/readout apparatus 16 which is provided in a conventional fashion. These three components are so well known in the art that further detailed discussion thereof is believed to be unnecessary. The optical coupling device 18 shown in Fig. 1 preferably is adapted to provide the only optical path between the plasma torch 12 and the monochromator 14.

In one embodiment, for example, as shown in Figure 2, the optical coupling device 18 includes a tube 20 which is open at both ends thereof and dimensioned so as to fit over and surround the flame 22 of a plasma torch 23. Preferably the lower end 24 of the tube 20 is provided with a shoulder 26 dimensionally adapted to mate with the plasma torch 23. A first segment 28 of a tubular body 30 is rigidly affixed to and extends from the tube 20 of the optical coupling device 18. The first segment 28 is a hollow cylindrical segment adapted and shaped so as to fit, in a gaseously sealed fashion, with one side 29 of the tube 20. The first segment 28 is fixed to the tube 20 at a point such that the linear axis of the body 30 is substantially central to the flame of the plasma torch 23. This alignment ensures that the emitted light radiation of interest is at its highest intensity along the axis of the body 30. As shown in Figure 2, an exit, or purge, port 32 extends from the first segment 28 and, as more fully discussed below, serves as a vent to the ambient atmosphere.

The body 30 of the optical coupling device 18 also includes a second cylindrical segment 34 which is preferably axially aligned with the first segment 28. The diameter of the second segment 34 should be at least as large as that of the first segment 28.

The optical coupling device 18 is affixed to the monochromator 14 in such a fashion that a gastight seal is formed at the interface therebetween. In one embodiment the gaseous seal is accomplished by a threaded connection between a first, internally threaded, flange 36 surrounding the second segment 34 and a second, externally threaded, flange 38 projecting from the monochromator 14. On O-ring 40 is located around the second segment 34 so that when the first and second flanges, 36 and 38 respectively, are threaded one onto the other, the pressure thus generated deforms the O-ring 40 to produce a gaseous seal.

In this embodiment, the monochromator 14 is provided with an inlet port 42 through one wall 44 thereof. The inlet port 42 is situated such that it is between the second flange 38 and the first optical element 46 of the monochromator 14. As shown, the monochromator 14 is substantially gaseously sealed with respect to the inlet port 42 by the mounting means 48 associated with the first optical element 46. Alternatively, if the monochromator 14 itself is sufficiently sealed then it and the device 18 can be filled with a common medium.

Thus, in operation, an oxygen-free inert gas is injected, via the inlet port 42, into the optical coupling device 18 to drive out, via the vent port 32, any oxygen-containing medium therein.

The optical coupling device 18 is made of quartz, withstanding temperatures on the order of about 5,000°C.

Referring now to Figure 3, there is shown another embodiment of an optical coupling device 18' wherein a first cylindrical segment 50 of a tubular body 56 is rigidly affixed about an opening 51 in the wall 53 of a tube 52. This segment 50 includes a quartz window 54 recessed a distance from the tube 52. The recessed window 54, being recessed from the tube 52, extends the lifetime of the optical coupling device 18' by reducing the heat to which the recessed window 54 is subjected. Nevertheless, the window 54 is designed such that it seals that portion of the segment 50 between the tube 52 and a monochromator not shown in Figure 3. In addition, the portion of the segment 50 between the recessed window 54 and the flame is nevertheless maintained oxygen-free due to the presence of an argon gaseous "seal" which usually surrounds conventional plasma torches during the operation thereof.

The optical coupling device 18' shown in Figure 3 includes a sealed rear window 58 proximate the end of the tubular body 56.

The body 56 includes a first means 60 in gaseous communication therewith and a second means 62 for providing gaseous communication therewith. The first and second means, 60 and 62, can be interchangeably used as input and venting ports. In this embodiment the optical coupling device 18′ can be sealed after it is filled with an oxygen-free inert gas, such as, for example, nitrogen.

It will be understood that instead of filling the device 18 or 18′ with an inert oxygen-free gas to provide an oxygen-free optical path therethrough, the device 18 or 18′ may just be evacuated using a known vacuum system. In such an embodiment, one of the ports, i.e., either 32 or 42 of the device 18 shown in Figure 2, is sealed and a vacuum is drawn via the other port, i.e., either 42 or 32. Specifically, a vacuum of about $10^{-5}$ torr would be sufficient to provide the desired substantially oxygen-free path. In such an instance the venting occurs due to the reduced pressure at the port used which thereby causes any oxygen containing medium within the body 30 to exit the body via that port.

**Claim**

1. An optical coupling device when used for coupling light emitted by a plasma torch light source to a spectrometer, said coupling device comprising
— a quartz tube (20, 52) for containing said source, and
— a tubular quartz body (30, 56), said tubular body being at one end rigidly affixed to said tube and at its other end being, in use, fixed in a gastight manner to the spectrometer, the axis of said tubular body being perpendicular to the axis of said tube, said tubular body having an opening in its wall (32, 60) for allowing the supply of gas or for applying a vacuum to said tubular body so as to provide an oxygen-free optical path within said tubular body,
characterised by
— an optical gastight sealing quartz window (29, 54) located either in the wall of said tube so as to close said one end of said tubular body or within said tubular body near to its junction with said tube so as to close said tubular body in the region of its said one end.

**Revendication**

1. Dispositif de couplage optique utilisé pour coupler de la lumière émise par une source lumineuse à torche à plasma vers un spectromètre, ledit dispositif de couplage comprenant

— un tube en quartz (20, 52) pour contenir ladite source, et
— un corps en quartz tubulaire (30, 56), ledit corps tubulaire étant à une extrémité attaché rigidement audit tube et à son autre extrémité, étant, à l'utilisation, fixé d'une manière étanche aux gaz au spectromètre, l'axe dudit corps tubulaire étant perpendiculaire à l'axe dudit tube, ledit corps tubulaire ayant une ouverture dans sa paroi (32, 60) pour permettre l'alimentation en gaz ou pour appliquer un vide audit corps tubulaire de manière à fournir un parcours optique exempt d'oxygène à l'intérieur dudit corps tubulaire,
caractérisé par
— une fenêtre optique en quartz étanche aux gaz (29, 54) située soit dans la paroi dudit tube de manière à fermer l'une dite extrémité dudit corps tubulaire, soit à l'intérieur dudit corps tubulaire près de sa jonction avec ledit tube de manière à fermer ledit corps tubulaire dans la région de ladite extrémité.

**Patentanspruch**

1. Optische Verbindungsvorrichtung zur Einkopplung von Licht, welches von einer Plasmabrennerlichtquelle emittiert wird, an ein Spektrometer, wobei die Vorrichtung eine Quarzröhre (20, 52) zur Aufnahme der Quelle aufweist sowie einen rohrförmigen Quarzkörper (30, 56), der mit einem Ende mit der Röhre und am anderen Ende im Betrieb gasdicht abschließend mit dem Spektrometer verbunden ist, wobei die Achse des rohrförmigen Körpers senkrecht zur Achse der Röhre verläuft und wobei der rohrförmige Körper eine Öffnung in seiner Wand (32, 60) besitzt, durch die Gas eingeleitet werden kann oder durch die hindurch der rohrförmige Körper evakuiert werden kann, so daß ein sauerstofffreier optischer Weg innerhalb des rohrförmigen Körpers entsteht,
dadurch gekennzeichnet,
daß ein optisches, gasdicht abdichtendes Quarzfenster (29, 54) entweder in der Röhrenwand angeordnet ist, um das eine Ende des röhrenförmigen Körpers abzuschließen oder innerhalb des röhrenförmigen Körpers in der Nähe der Verbindung mit dem genannten Rohr, um den rohrförmigen Körper im Bereich dieses einen genannten Endes abzuschließen.

FIG. 1

FIG. 2

FIG. 3